# EUROPÄISCHE PATENTSCHRIFT

(11) **EP 0 458 313 B1**
(45) Veröffentlichungstag und Bekanntmachung des Hinweises auf die Patenterteilung: **01.09.1993**
(21) Anmeldenummer: 91108318.6
(22) Anmeldetag: 22.05.1991
(51) Int. Cl.: B60K 20/02, F16H 59/04

(54) **In einem Gehäuse angeordnetes Gebergerät zur Bewegung von Steuerzügen, Stangen und dgl.**
Transmitting device arranged in a housing, for movement of control cords, rods, etc.
Appareil transmetteur situé dans un boitier pour le mouvement de câbles Bowden, de barres ou similaires

(30) Priorität: 25.05.1990 DE 4016977
(43) Veröffentlichungstag der Anmeldung: 27.11.1991
(73) Patentinhaber: meflex Telecontrol GmbH & Co., D-35630 Ehringshausen (DE)
(72) Erfinder:
(74) Vertreter: Müller, Eckhard, Dr.

(56) Entgegenhaltungen:
- EP-A- 0 075 693
- DE-B- 1 958 146
- GB-A- 1 119 587
- US-A- 3 793 901
- US-A- 4 022 078

## Beschreibung

Die Erfindung betrifft ein Gebergerät zur Steuerung eines räumlich entfernt angeordneten Getriebes mittels eines Seilzuges, einer Stange oder dgl. gemäß dem Oberbegriff des Anspruches 1.

Derartige Gebergeräte, meist kurz Geber genannt, sind bsw. aus der "Ingenieurzeitschrift für Planung, Entwicklung, Konstruktion", Konradin Verlag Robert Kohlhammer GmbH, Leinfelden-Echterdingen, DE, Seite 117-119, April 1980, bekannt, z. B. in Form von Zahnstangengebern, Umschlingungsgebern oder einfachen Hebelgebern, bei denen über einen Hebel die Verstellung eingeleitet wird, die dann über einen zweiten, mit dem ersten Hebel fest verbundenen Hebel auf den Zug oder die Stange übertragen wird.

Bei vielen Getrieben müssen durch den Geber jedoch mehrere Funktionen gesteuert werden. Zum Beispiel muß bei Straßenbaufahrzeugen zusätzlich zur Fahrtbewegung oft noch eine Vibration eingeschaltet und auch wieder ausgeschaltet werden, und es müssen Sicherheitsbereiche berücksichtigt werden, innerhalb derer eine solche Vibration noch nicht eingeschaltet sein darf bzw. schon wieder ausgeschaltet sein muß.

Bei der Konstruktion eines solchen Gebers kommt es daher darauf an, möglichst viele Funktionen steuern zu können und trotzdem den Geber in seiner Größe in vertretbaren Grenzen zu halten.

Der Erfindung liegt die Aufgabe zugrunde, ein solches Gebergerät kleiner Abmessung mit mehreren Funktionen auszustatten.

Diese Aufgabe ist durch ein Gebergerät gelöst, welches die in Anspruch 1 angegebene Kombination von Merkmalen besitzt. Danach gelingt die Lösung der Aufgabe dadurch, daß der Hebel des Gerätes nicht nur schwenkbar, sondern zusätzlich auch kippbar ist und außer der Verstellung des Zuges auch noch elektrische Schalter betätigt, die ihrerseits ausgewählte Funktionen im Gebtriebe steuern.

In der Zeichnung ist die Erfindung in einem Ausführungsbeispiel dargestellt. Es zeigen:
- Figur 1: das erfindungsgemäße Gebergerät in einem Längsschnitt,
- Figur 2: einen Schnitt durch das Gerät entlang der Linie C-D der Figur 1,

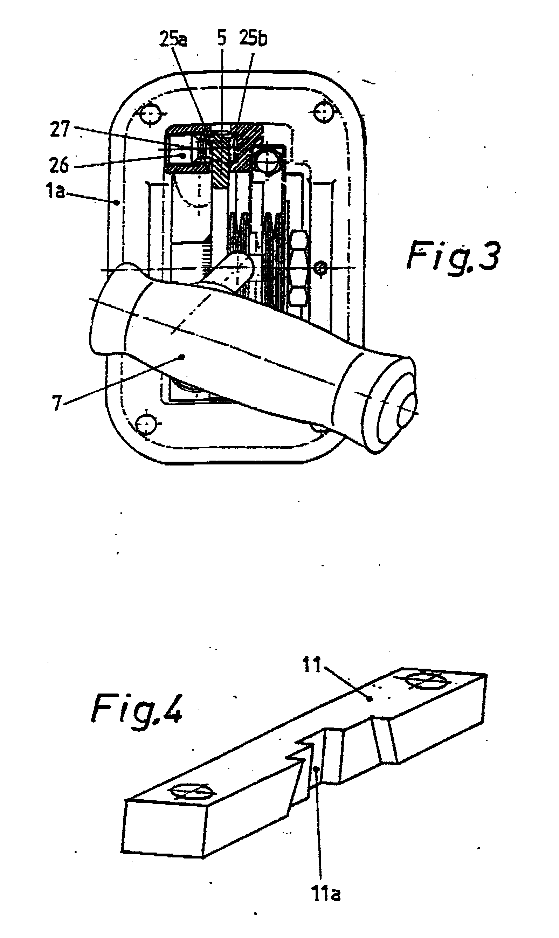

- Figur 3: eine Draufsicht auf das Gerät, ohne Balg,
- Figur 4: die Rastleiste des Gerätes in perspektivischer Ansicht,
- Figur 5: eine teilweise geschnittene Ansicht des Gerätes in Richtung des Pfeiles B der Figur 1.

In den Figuren ist mit 1 das Gehäuse des Gerätes bezeichnet, das aus einem im wesentlichen rechteckigen Behälter mit am oberen Rand umlaufenden Bund 1a besteht. Das Gehäuse 1 ist nach oben offen und wird mit den in ihm enthaltenen Getriebeelementen von einem Balg 2 abgedeckt.

Oben besitzt das Gehäuse 1 zwei angeformte Augen 1b, in denen eine Achse 3 fest gelagert ist. Auf letzterer ist eine Hohlwelle 4 drehbar, die mit einer Scheibe 5 fest verbunden ist, an welcher der zu verschiebende Zug oder die Stange angreift.

Die Scheibe 5 ist mit mehreren vorbereiteten Anlenk-Löchern 21a versehen, und das Gehäuse 1 besitzt mehrere hierzu korrespondierende Öffnungen 21 zur Herausführung des Steuerzuges. Diese verschiedenen Löcher 21a und Öffnungen 21 wurden vorgesehen, um den Steuerzug unter verschiedenen Winkeln vom Gebergerät wegführen zu können.

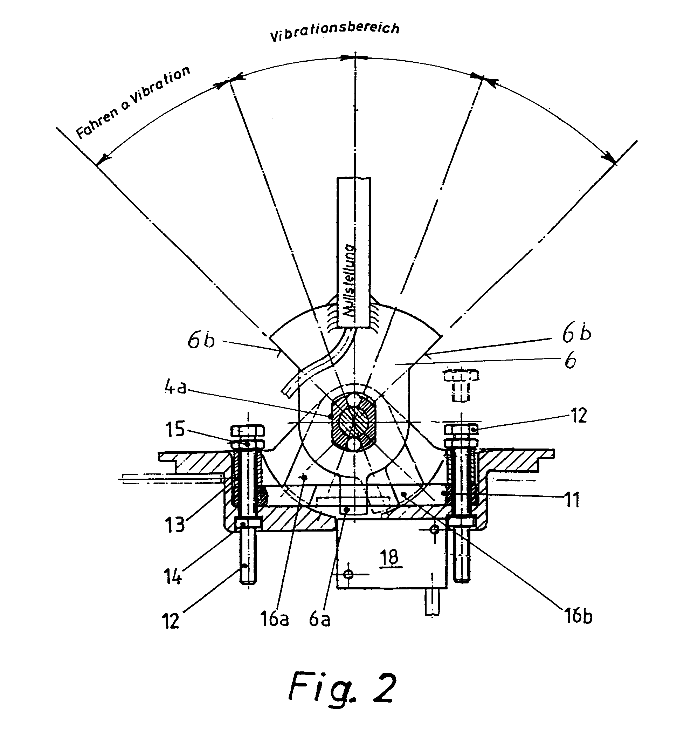

Außerdem besitzt die Hohlwelle 4 zwei angefräste Flächen 4a, wie am besten aus Figur 2 erkennbar. Auf diese Flächen ist eine Steuerscheibe 6 gesteckt, an der ein Hebel 7 befestigt, z. B. angeschweißt ist. Steuerscheibe 6 und Hebel 7 sind daher als einstückig anzusehen. Die Steuerscheibe 6 wird von zwei Paketen Tellerfedern 8 senkrecht gehalten, die sich einerseits an der festen Scheibe 5 und andererseits an einer auf die Hohlwelle 4 geschraubten Mutter 9 abstützen. Gegen die Kraft dieser Federn 8 ist die Steuerscheibe 6 mit dem Hebel 7 senkrecht zur Schwenkrichtung des Hebels 7 kippbar.

Zu diesem Zweck ist der Durchmesser des Loches 21a in der Steuerscheibe 6 etwas größer gehalten als der Außendurchmesser der Hohlwelle 4. Mit ihrem Lochdurchmesser sitzt die Steuerscheibe 6 auf zwei Kugeln 10, die auf entgegengesetzten Seiten in zwei Bohrungen der Hohlwelle 4 gelagert sind (Figur 2) und sich auf der festen Achse 3 abstützen.

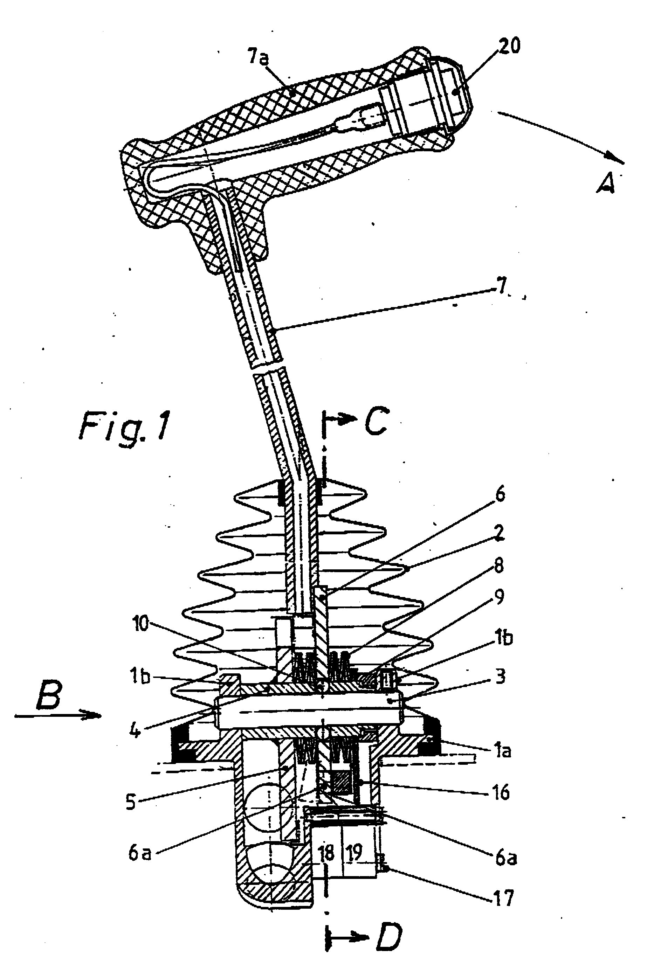

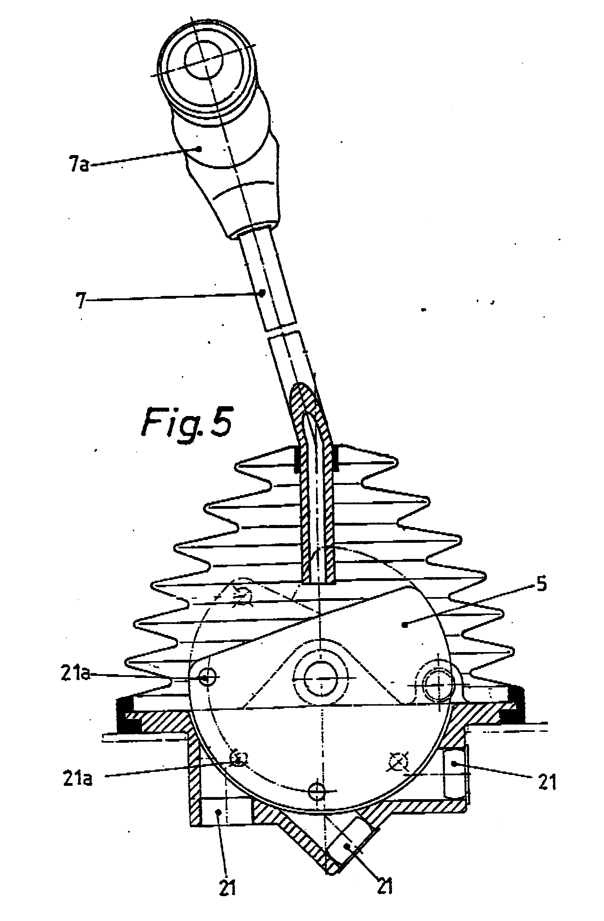

Die Steuerscheibe 6 besitzt auf der dem Hebel 7 entgegengesetzten Seite einen Steuerlappen 6a, der mit einer Rastleiste 11 zusammenwirkt. Die in ihrer äußeren Form aus Figur 4 erkennbare Rastleiste 11 hat einen Ausbruch 11a, in dem in Ruhestellung der Steuerlappen 6a durch die Kraft der Tellerfedern 8 gehalten wird. Durch Kippen des Hebels 7 in Pfeilrichtung A (Figur 1) kann der Steuerlappen 6a aus dem Ausbruch 11a bewegt werden, so daß der Hebel 7 zum Schwenken in der einen oder anderen Richtung frei wird.

Die Rastleiste 11 besitzt an ihren beiden Enden je ein Durchgangsloch, durch die Schrauben 12 greifen. Durch Hülsen 13 wird dabei auch die Rastleiste 11 in ihrer Lage festgehalten.

Die Schrauben 12 sind lang ausgebildet und greifen am Gehäuse 1 unten durch Muttern 14 und werden oben durch Kontermuttern 15 festgezogen. Die Köpfe der Schrauben 12 können dadurch mehr oder weniger weit herausgeschraubt werden und dienen im Zusammenwirken mit den an der Steuerscheibe 6 angearbeiteten Anschlägen 6b als Begrenzung für den Schwenkwinkel des Hebels 7.

Die Hülsen 13 könnten auch durch Muttern ersetzt werden, die direkt auf der Rastleiste 11 aufliegen. Diese Muttern wären dann jedoch nur schwer und mit einem Spezialwerkzeug zugänglich. Die Hülsen 13 verlagern daher die Kontermuttern 15 in vorteilhafter Weise nach oben außerhalb des Gehäuses 1, wo sie leicht zugänglich sind.

Auf den angefrästen Flächen 4a der Hohlwelle 4 sitzt außerdem mit einem korrespondierenden Loch noch eine Schaltscheibe 16, die dadurch zu gemeinsamer Drehung mit der Hohlwelle 4 verbunden ist. Die Schaltscheibe 16 besitzt die aus Figur 2 erkennbare Form und hat zwei Schaltfortsätze 16a, 16b, deren Funktion nachstehend erläutert ist.

An der Unterseite des Gehäuses 1 sind mit den Schrauben 17 zwei induktive Näherungsschalter 18 und 19 angeschraubt (Figur 1 und Figur 2). Von diesen Näherungsschaltern 18, 19 wird der Näherungsschalter 18 von den Steuerlappen 6a aktiviert, während der Näherungsschalter 19 von den Schaltfortsätzen 16a, 16b geschaltet wird.

Die Funktion des Gebergerätes wird im Folgenden in der gedachten Verbindung mit einer Straßenbaumaschine, z. B. einer Vibrations-Straßenwalze beschrieben. Jedoch ist der Einsatz des Gebergerätes nicht auf derartige Maschinen beschränkt, sondern kann überall dort erfolgen, wo durch einen Geber mehrere Funktionen eines Getriebes, Vorrichtung oder dgl. zu steuern sind, insbesondere auch dann, wenn ein Teil dieser Funktionen elektrisch gesteuert werden muß oder kann.

In Verbindung mit einer Straßen-Vibrationswalze ergibt sich für das Gebergerät folgende Funktion:

In der in den Figuren 1 und 2 gezeigten Stellung ist der Steuerlappen 6a im Ausbruch 11a der Rastleiste 11 eingerastet. In dieser Stellung steht er dem Näherungsschalter 18 gegenüber, so daß dieser durchgeschaltet, d. h. aktiviert ist. Über diesen Näherungsschalter 18 läuft der Stromkreis des Anlassers, woraus sich ergibt, daß die Walze nur in dieser Mittelstellung des Hebels 7, die auch als Ruhestellung zu bezeichnen ist, angelassen werden kann. Wenn demnach die Walze am Ende eines Arbeitsganges einfach dadurch abgestellt wird, daß der Schlüssel aus dem Zündschloß gezogen wird, während der Hebel 7 noch auf Vor- oder Rückwärtslauf - mit oder ohne Vibration - eingestellt ist, so kann die Walze nachfolgend doch nicht wieder angelassen werden, weil der Näherungsschalter 18 den Stromkreis des Anlassers unterbricht. Es muß daher erst der Hebel 7 in seine Mittelstellung zurückgeschaltet werden, in welcher der Steuerlappen 6a den Näherungsschalter 18 aktiviert. Erst in dieser Stellung, in welcher der Anlasser-Stromkreis geschlossen, Vor- bzw. Rückwärtslauf jedoch ausgeschaltet sind, kann die Walze gestartet werden. Diese Konstruktion ist somit eine Sicherung dagegen, daß die Walze bei eingeschaltetem Vor- bzw. Rückwärtslauf angelassen wird und dann sofort losläuft.

Ist die Walze ordnungsgemäß angelassen, so kann sie durch Schwenken des Hebels 7 mehr oder weniger schnell vorwärts oder rückwärts gefahren werden. Die Kraft, die zur Schwenkung des Hebels 7 aufgewendet werden muß, ist einstellbar. Zu diesem Zweck ist im Gehäuse 1 eine einstellbare Klemmvorrichtung für die Scheibe 5 vorgesehen. Diese Klemmvorrichtung besteht aus zwei Klemmbacken 25a, 25b, zwischen denen die Scheibe 5 geführt wird und von denen die Klemmbacke 25a in Richtung senkrecht zur Scheibe 5 beweglich gelagert ist. Die Klemmbacke 25a wird von einer Feder 27 beaufschlagt, die sich andererseits an einer Schraube 26 abstützt, die im Gehäuse 1 senkrecht zur Scheibe 5 mehr oder weniger tief eingeschraubt werden kann. Die Schraube 26 ist von außen zugänglich, so daß die Klemmwirkung der Klemmvorrichtung jederzeit variiert werden kann.

Die Vibration der Walze kann durch einen Druck auf einen im Griff 7a des Hebels 7 untergebrachten Druckschalter eingeschaltet werden. Die Geschwindigkeit der Walze wird gesteuert durch die vom Hebel 7 über die feste Scheibe 5 bewirkte Verschiebung des nicht weiter dargestellten Steuerzuges.

Bei Überschreiten einer bestimmten Geschwindigkeit muß allerdings die Vibration wieder ausgeschaltet werden. Dies geschieht durch die Schaltscheibe 16 in Verbindung mit dem induktiven Näherungsschalter 19. Wenn nämlich mit dem Hebel 7 auch die Schaltscheibe 16 mit ausgeschwenkt wird, so geraten die Schaltfortsätze 16a bzw. 16b in den Bereich des Näherungsschalters 19, der seinerseits die Vibrationsausschaltung bewirkt.

Auf diese Weise sind durch das Gebergerät eine Vielzahl von Funktionen in einem Geber relativ kleiner Bauart vereinigt. Dabei ist es besonders vorteilhaft, daß das Gebergerät leicht an unterschiedliche Bedingungen und Erfordernisse angepaßt werden kann. So kann z. B. die Rastleiste 11 leicht ausgewechselt und gegen eine andere Leiste ausgetauscht werden, die mit ihren Ausbrüchen und Nuten auf eine besonders gewünschte Schwenkweite abgestellt ist. Das Gleiche gilt für die Schaltscheibe 16 und die Steuerscheibe 6 mit ihren Anschlägen 6b. Ohne die grundlegende Konstruktion des Gebergerätes zu ändern, ist es möglich, durch spezielle Ausbildung dieser Elemente dem Gerät die jeweils gewünschte Spezifikation zu verleihen.

## Patentansprüche

1. Gebergerät zur Bewegung von Steuerzügen, Stangen und dgl. zur Steuerung mindestens einer Funktion in einem räumlich entfernten Getriebe oder sonstigen Vorrichtung mit einem um eine feste Achse (3) schwenkbaren Hebel (7) und mit einer Rastvorrichtung zur Festlegung mindestens einer definierten Position des Hebels (7), gekennzeichnet durch die Kombination folgender Merkmale:
a) der Hebel (7) ist mit einer Steuerscheibe (6) einstückig, die mit einer drehbaren Achse (4) formschlüssig zu gemeinsamer Drehung verbunden ist,
b) mit der Achse (4) ist eine Scheibe (5) einstückig, an welcher der Steuerzug, die Stange oder dgl. angelenkt ist,
c) die Steuerscheibe (6) ist zusammen mit dem Hebel (7) auf der Achse (4) senkrecht zur Verstellrichtung des Hebels (7) kippbar und besitzt einen hervorspringenden Steuerlappen (6a), der bei dieser Kippbewegung aus einer Rastvorrichtung (11) aus- bzw. einrastet, und
d) mit der Achse ist ferner eine Schaltscheibe (16) zu gemeinsamer Drehung verbunden, die mit mindestens einem Schaltfortsatz (16a) versehen ist, der mit mindestens einem induktiven Näherungsschalter (19) zwecks elektrischer Schaltung mindestens einer Getriebefunktion zusammenwirkt.

2. Gebergerät nach Anspruch 1, dadurch gekennzeichnet, daß am Geber ein zweiter induktiver Näherungsschalter (18) vorgesehen ist, der von dem Steuerlappen (6a) der Steuerscheibe (6) geschaltet wird, wenn die Steuerscheibe (6) mit dem Hebel (7) aus der mittleren Ruhelage gekippt wird.

3. Gebergerät nach Anspruch 1 oder 2, dadurch gekennzeichnet, daß die Steuerscheibe (6) mit zwei symmetrisch zur Ruhestellung angeordneten Schaltfortsätzen (16a, 16b) versehen ist, die jeweils bei Schwenken des Hebels (7) aus der mittleren Ruhelage in der einen oder anderen Richtung den ihnen zugeordneten Näherungsschalter (18, 19) aktivieren.

4. Gebergerät nach einem der Ansprüche 1 bis 3, dadurch gekennzeichnet, daß auf der Achse (4) zwei axial wirkende Federn vorgesehen sind, zwischen denen die Steuerscheibe (6) in einer senkrecht zur Achse (4) verlaufenden Mittelstellung gehalten wird.

5. Gebergerät nach Anspruch 4, dadurch gekennzeichnet, daß die Federn aus zwei gleichen Paketen von Tellerfedern (8) bestehen.

6. Gebergerät nach einem der Ansprüche 1 bis 5, dadurch gekennzeichnet, daß die Steuerscheibe (6) symmetrisch zur Ruhestellung zwei Anschläge (6b) besitzt, die im Zusammenwirken mit Endanschlägen die Schwenkweite des Hebels (7) begrenzen.

7. Gebergerät nach einem der Ansprüche 1 bis 6, dadurch gekennzeichnet, daß die Rastvorrichtung aus einer mit seitlichen Nuten versehenen Rastleiste (11) besteht, in die der Steuerlappen (6a) eingreift, und daß diese Rastleiste (11) auswechselbar in einem das Gebergerät umgebenden Gehäuse (1) befestigt ist.

8. Gebergerät nach Anspruch 7, dadurch gekennzeichnet, daß die Rastleiste (11) durch Schrauben (12) gehalten wird, die mit Kontermuttern (15) versehen und mehr oder weniger tief einschraubbar sind, und deren Schraubenköpfe als Endanschläge für die Anschläge (6b) der Steuerscheibe (6) dienen.

9. Gebergerät nach einem der Ansprüche 1 bis 8, dadurch gekennzeichnet, daß die Scheibe (5) mit mehren im Winkel zueinander versetzten Löchern (21a) zum Anlenken des Steuerzuges versehen ist, und daß das Gehäuse (1) zur Aufnahme des Gebergerätes mit mehrern dazu korrespondierenden Öffnungen (21) zum Herausführen des Steuerzuges versehen ist.

10. Gebergerät nach einem der Ansprüche 1 bis 9, dadurch gekennzeichnet, daß das Gehäuse (1) zur Aufnahme des Gebergerätes eine einstellbare Klemmvorrichtung für die Scheibe (5) enthält.

11. Gebergerät nach Anspruch 10, dadurch gekennzeichnet, daß die Klemmvorrichtung aus zwei Klemmbacken (25a, 25b) besteht, zwischen denen die Scheibe (5) geführt ist, und daß auf die Klemmbacke (25a) eine Feder (27) einwirkt, die mittels einer von außen zugänglichen Schraube (26) auf mehr oder weniger Druck einstellbar ist.

12. Gebergerät nach einem der Ansprüche 1 bis 11, dadurch gekennzeichnet, daß die mit der Steuerscheibe (6) formschlüssig verbundene drehbare Achse eine Hohlwelle (4) ist, die auf einer gehäusefesten Achse (3) gelagert ist, daß der Formschluß durch zwei angefräste Flächen (4a) der Hohlwelle (4) gegeben ist, auf welche die Steuerscheibe (6) mit einem entsprechend geformten Loch gesteckt wird, und daß die Hohlwelle (4) in Richtung des Hebels (7) auf den einander gegenüberliegenden Seiten mit je einem Loch versehen ist, in denen je eine Kugel (10) gelagert ist, die beide gemeinsam die Steuerscheibe (6) zentrisch zur festen Achse halten und als Kippunkte bei der Kippung der Steuerscheibe (6) dienen.

## Claims

1. Control head apparatus for the movement of control cables, rods and the like for the control of at least one function in a spatially remote transmission or other such device, comprising a lever (7) pivotable about a fixed axle (3) and a detent device for the fixing of at least one defined position of the lever (7), characterised by the combination of the following features:
a) the lever (7) is unitary with a control disc (6), which is form-engagingly connected with a rotatable axle (4) for rotation in common therewith,
b) a disc (5), to which the control cable, the rod or the like is articulated, is unitary with the axle (4),
c) the control disc (6) together with the lever (7) is tiltable on the axle (4) perpendicularly to the adjusting direction of the lever (7) and possesses a protruding control tongue (6a) which is notched into and unnotched from a detent device (11) in this tilting movement, and
d) a switch disc (16) is, in addition, connected with the axle for rotation in common therewith and is provided with at least one switch projection (16a), which co-operates with at least one inductive proximity switch (19) for the purpose of electrical switching of at least one transmission function.

2. Control head apparatus according to claim 1, characterised thereby that provided at the control head is a second inductive proximity switch (18), which is switched by the control tongue (6a) of the control disc (6) when the control disc (6) is tilted by the lever (7) out of the central rest position.

3. Control head apparatus according to claim 1 or 2, characterised thereby that the control disc (6) is provided with two switching projections (16a, 16b), which are arranged symmetrically to the rest position and which each activate the respectively associated proximity switch (18, 19) on pivotation of the lever (7) out of the central rest position in one or the other direction.

4. Control head apparatus according to one of claims 1 to 3, characterised thereby, that provided on the axle (4) are two axially acting springs, between which the control disc (6) is held in a central setting extending perpendicularly to the axle (4).

5. Control head apparatus according to claim 4, characterised thereby that the springs consist of two like packets of plate springs (8).

6. Control head apparatus according to one of claims 1 to 5, characterised thereby, that the control disc (6) possesses two abutments (6b) which are symmetrical to the rest setting and which in co-operation with end stops limit the pivot range of the lever (7).

7. Control head apparatus according to one of claims 1 to 6, characterised thereby that the detent device consists of a detent strip (11) which is provided with lateral grooves and in which the control tongue (6a) engages and that this detent strip (11) is exchangeable mounted in a housing (1) enclosing the control head apparatus.

8. Control head apparatus according to claim 7, characterised thereby that the detent strip (11) is held by screws (12), which are provided with lock nuts (15) and can be screwed in to a greater or lesser depth and the screwheads of which serve as end stops for the abutments (6b) of the control disc (6).

9. Control head apparatus according to one of claims 1 to 8, characterised thereby that the disc (5) is provided with several holes (21a), which are displaced at an angle relative to one another, for the articulation of the control cable, and that the housing (1) for the reception of the control head apparatus is provided with several openings (21), which correspond thereto for the leading out of the control cable.

10. Control head apparatus according to one of claims 1 to 9, characterised thereby that the housing (1) for the reception of the control head apparatus contains an adjustable clamping device for the disc (5).

11. Control head apparatus according to claim 10, characterised thereby that the clamping device consists of two clamping jaws (25a, 25b), between which the disc (5) is led, and that a spring (27), which is settable to greater or lesser pressure by means of an externally accessible screw (26) acts on the clamping jaw (25a).

12. Control head apparatus according to one of claims 1 to 11, characterised thereby that a hollow shaft (4), which is mounted on an axle (3) fast with the housing, is the rotatable axle connected by form-engagement with the control disc (6), that the form engagement is given by two ground surfaces (4a) of the hollow shaft (4), onto which the control disc (6) is plugged by a correspondingly shaped hole, and that the hollow shaft (4) is provided in direction of the lever (7) and on each of the mutually opposite sides with a respective hole in which a respective ball (10) is borne, which balls together hold the control disc (6) centrally with respect to the fixed axle and serve as tilt fulcrum in the tilting of the control disc (6).

## Revendications

1. Dispositif de commande pour le déplacement d'un câble ou d'une tringle de commande ou analogue pour le contrôle d'au moins une fonction dans un mécanisme éloigné ou autre dispositif analogue comportant un levier (7) pouvant basculer autour d'un axe fixe (3) et un dispositif d'encliquetage pour l'arrêt du levier (7) dans au moins une position définie, caractérisé par la combinaison des points remarquables suivants :
a) le levier (7) forme une pièce unique avec une plaque de commande (6) qui est solidaire d'un axe tournant (4) pour tourner avec lui,
b) une patte (5) sur laquelle s'articule le câble de traction, la tingle ou analogue est solidaire de l'axe (4),
c) la plaque de commande (6) ainsi que le levier (7) peuvent être basculés perpendiculairement à la direction de déplacement du levier (7) et comportent une oreille de commande (6a) saillante qui se dégage ou s'engage dans une plaquette d'encliquetage (11) lors de ce basculement, et
d) solidaire de la rotation de l'axe il y a de plus une plaque de commutation (16) qui est pourvue d'au moins un nez de commutation (16a) qui coopère avec au moins un interrupteur de proximité inductif (19) en vue de la commutation électrique d'au moins une fonction du mécanisme.

2. Dispositif de commande selon la revendication 1, caractérisé en ce que sur le dispositif est prévu un deuxième interrupteur de proximité inductif (18) qui est commuté par l'oreille de commande (6a) de la plaque de commande (6) lorsque ladite plaque de commande (6) est basculée hors de sa position de repos médiane par le levier (7).

3. Dispositif de commande selon l'une quelconque des revendications 1 ou 2, caractérisé en ce que la plaque de commande (6) est pourvue de deux nez de commutation (16a et 16b) disposés symétriquement par rapport à la position de repos qui activent respectivement lors du basculement du levier (7) hors de sa position de repos dans l'une ou l'autre des directions, les interrupteurs de proximité (18 et 19) qui leur sont adjoints.

4. Dispositif de commande selon l'une quelconque des revendications 1 à 3, caractérisé en ce que sur l'axe (4) sont prévus deux ressorts à poussée axiale entre lesquels la plaque de commande (6) est maintenue dans une position médiane perpendiculaire à l'axe (4) durant son mouvement.

5. Dispositif de commande selon la revendication 4, caractérisé en ce que lesdits ressorts sont constitués par deux paquets de rondelles Belleville (8).

6. Dispositif de commande selon l'une quelconque des revendications 1 à 5, caractérisé en ce que la plaque de commande (6) comporte deux butées (6b) symétriques par rapport à sa position de repos et qui limitent la course de basculement du levier (7) en coopérant avec des butées fixes.

7. Dispositif de commande selon l'une quelconque des revendications 1 à 6, caractérisé en ce que le dispositif d'encliquetage est constitué par une plaquette d'encliquetage (11) pourvue de gorges latérales dans lesquelles l'oreille de commande (6a) s'engage et en ce que la plaquette d'encliquetage (11) est montée interchangeable dans un boîtier (1) entourant le dispositif de commande.

8. Dispositif de commande selon la revendication 7, caractérisé en ce que la plaquette de commande (11) est retenue par des vis (12) qui sont pourvues de contre-écrous (15) et peuvent être engagées plus ou moins profondemment, leurs têtes servant de butées fixes aux butées (6b) de la plaque de commande (6).

9. Dispositif de commande selon l'une quelconque des revendications 1 à 8, caractérisé en ce que la patte (5) est pourvue de plusieurs trous (21a) décalés angulairement les uns par rapport aux autres pour l'accrochage du câble de commande et en ce que le boîtier (1) contenant le dispositif de commande est pourvu de plusieurs ouvertures (21) correspondant aux trous ci-dessus pour permettre de faire sortir le câble de commande.

10. Dispositif de commande selon l'une quelconque des revendications 1 à 9, caractérisé en ce que le boîtier (1) contenant le dispositif de commande comporte un dispositif de pincement réglable pour la patte (5).

11. Dispositif de commande selon la revendication 10, caractérisé en ce que le dispositif de pincement est constitué par deux joues de pincement (25a et 25b) entre lesquelles la patte (5) est guidée et en ce qu'un ressort (27) dont la pression est plus ou moins réglable au moyen d'une vis (26) accessible de l'extérieur, agit sur la joue de pincement (25a).

12. Dispositif de commande selon l'une quelconque des revendications 1 à 11, caractérisé en ce que l'axe tournant relié à la plaque de commande (6) est un axe creux (4) qui tourne sur l'axe (3) fixe dans le boîtier, en ce que la correspondance de forme est obtenue par deux faces fraisées (4a) sur ledit axe creux (4), faces sur lesquelles est engagée la plaque de commande (6) par son trou de forme correspondante et en ce que l'axe creux (4) est pourvu en direction du levier (7) sur ses côtés respectivement opposés de deux trous dans chacun desquels est disposée une bille (10), ces deux billes servant ensemble à maintenir la plaque de commande (6) centrée par rapport à l'axe fixe ainsi que de point d'arrêt lors du basculement de la plaque de commande (6).
